# EUROPÄISCHE PATENTSCHRIFT

(11) **EP 0 428 003 B1**
(45) Veröffentlichungstag und Bekanntmachung des Hinweises auf die Patenterteilung: **31.08.1994**
(21) Anmeldenummer: 90120770.4
(22) Anmeldetag: 30.10.1990
(51) Int. Cl.: C08G 65/20

(54) **Verfahren zur Herstellung von Polyetherglykolen**
Process for the preparation of polyetherglycols
Procédé de préparation de polyéther-glycols

(30) Priorität: 14.11.1989 DE 3937797
(43) Veröffentlichungstag der Anmeldung: 22.05.1991
(73) Patentinhaber: BASF Aktiengesellschaft, 67063 Ludwigshafen (DE)
(72) Erfinder: Mueller, Herbert, Dr., W-6710 Frankenthal (DE); Jeschek, Gerhard, Dr., W-6718 Gruenstadt (DE); Fischer, Rolf, Dr., W-6900 Heidelberg (DE); Weyer, Hans-Juergen, Dr., W-6800 Mannheim 1 (DE)

(56) Entgegenhaltungen:
- EP-A- 0 153 794
- EP-A- 0 181 621
- US-A- 3 478 109

## Beschreibung

Diese Erfindung betrifft ein neues Verfahren zur Herstellung von Polyetherglykolen durch Polymerisation von Tetrahydrofuran oder Copolymerisation von Tetrahydrofuran mit Oxiranen in Gegenwart von Heteropolysäuren und Kohlenwasserstoffen.

Polyetherglykole, wie Polyoxitetramethylenglykole (im folgenden als "PTMG" bezeichnet), insbesondere Polytetrahydrofuran (im folgenden mit "PTHF" bezeichnet) sind wichtige Ausgangsstoffe für die Herstellung von elastischen Fasern, elastischen Konstruktionswerkstoffen und Beschichtungen. Man stellt sie her durch Polymerisation von Tetrahydrofuran (im folgenden als "THF" bezeichnet) oder durch Copolymerisation von THF mit Oxiranen, wie Ethylenoxid oder Propylenoxid in Gegenwart kationischer Katalysatoren. Nach den Angaben der EP-A-0 126 471 verwendet man als Katalysatoren Heteropolysäuren. Dieses Verfahren verdient besondere Beachtung, da hierbei Polyalkylenetherglykole entstehen, während man bei der Polymerisation von THF nach anderen Methoden Ester der Polyalkylenetherglykole erhält, die vor ihrer Verwendung auf dem Gebiet der Polymeren noch zu den Polyalkylenetherglykolen hydrolysiert werden müssen.

Bei der Polymerisation von THF mit Heteropolysäuren gelingt es, den größten Teil des Katalysators nach der Reaktion durch einfache Phasentrennung wiederzugewinnen und in die Reaktion zurückzuführen. Ein nicht zu vernachlässigender Teil des Katalysators bleibt jedoch in der abgetrennten Polymerenlösung gelöst. Er muß aus Kostengründen und auch wegen der geforderten Reinheit des PTMG vollständig abgetrennt werden.

Ein Verfahren zur Reinigung von PTMG-Lösungen, die durch Heteropolysäuren verunreinigt sind, wird in der EP-A-0 181 621 beschrieben. Bei diesem mehrstufigen Verfahren werden die bei der Polymerisation von THF primär erhaltenen PTMG-Lösungen in THF, die einen PTMG-Gehalt von z.B. 23 Gew.-% aufweisen, in der ersten Stufe durch Abdestillieren von nicht umgesetztem THF auf eine Konzentration von etwa 50 Gew.-% PTMG gebracht. Danach gibt man eine erhebliche Menge eines Kohlenwasserstoffs zu, mischt gründlich und läßt das Gemisch während 30 Stunden in zwei Phasen absetzen. Die untere Phase besteht zu 50 Gew.-% aus der Heteropolysäure, der Rest aus PTMG, THF und Spuren des Kohlenwasserstoffes. Aus der oberen Phase, die die Hauptmenge des PTMG enthält, wird nicht umgesetztes THF abdestilliert. Die zurückbleibende Mischung aus Kohlenwasserstoff und PTMG trennt sich beim Abkühlen erneut in zwei Phasen. Man erhält eine Kohlenwasserstoff-Phase und eine Phase aus PTMG mit gelöstem Kohlenwasserstoff. Wird der Kohlenwasserstoff aus der PTMG-enthaltenden Phase abdestilliert, so erhält man schließlich ein PTMG, das noch 50 ppm Heteropolysäure enthält. Da dieser Gehalt an der stark sauren Verbindung im PTMG nicht toleriert werden kann, wird die Konzentration der Heteropolysäure in einer weiteren Operation dadurch reduziert, daß man das PTMG erneut in einem Kohlenwasserstoff löst und mit einem Adsorptionsmittel, wie Calziumoxid, Magnesiumoxid, Alumiumoxid, Aktivkohle oder einer aktiven Tonerde behandelt. Dieses Gesamt-Verfahren ist somit sehr umständlich. Es ist aber auch sehr aufwendig, da für die Entfernung des Katalysators aus dem Polymerisat etwa die vierfache (bezogen auf PTMG) Menge Kohlenwasserstoff nach den Reinigungsoperationen verdampft werden muß (s. Beispiele 1 und 15 der EP-A-0 181 621).

Bei der Polymerisation von THF und anderer cyclischer Ether mit Heteropolysäuren werden Polyalkylenetherglykole mit einer relativ engen Molekulargewichtsverteilung erhalten. Diese Polymere sind besonders gut geeignet für die Herstellung elastischer Fasern. Wegen der Schwierigkeit, Katalysatorreste aus dem Polymerisat zu entfernen, kamen diese Polyalkylenetherglykole mit der vorteilhaften engen Molekulargewichtsverteilung im großtechnischen Maßstab noch nicht zur Geltung.

Der vorliegenden Erfindung lag deshalb die Aufgabe zu Grunde, die Polymerisation von THF mit Heteropolysäuren wirtschaftlicher zu gestalten. Insbesondere sollte eine Möglichkeit gefunden werden, engverteilte Polyalkylenetherglykole kontinuierlich herzustellen. Das neue Verfahren sollte außerdem weniger Energie benötigen.

Es wurde nun gefunden, daß man bei der Herstellung von Polyetherglykolen durch Polymerisation von THF oder Copolymerisation von THF mit Oxiranen, bei der man als Katalysator eine Heteropolysäure verwendet, die gewünschten vorteilhaften Ergebnisse erhält, wenn man die Polymerisation in Gegenwart von 20 bis 500 Gew.-%, bezogen auf das eingesetzte THF, eines Kohlenwasserstoffes durchführt.

Überraschenderweise erhöhen sich beim erfindungsgemäßen Verfahren die Polymerisationsgeschwindigkeit und der Polymerisationsumsatz. Dies war nicht vorhersehbar. Da die Polymerisationsgeschwindigkeit von der Monomerenkonzentration beeinflußt wird, hätte man aufgrund des Verdünnungseffektes eine Verlangsamung der Polymerisation erwarten müssen. Die Polymerisation der THF ist eine Gleichgewichtsreaktion, die den temperaturabhängigen Endumsatz bestimmt. Im Gleichgewicht halten sich Aufbau und Abbau im Reaktionssystem die Waage. Der Umsatz, bezogen auf das eingesetzte Monomere, sollte deshalb unabhängig von einem im Reaktionssystem vorhandenen Lösungsmittel sein. Abweichend von dieser Erwartung stellten wir aber fest, daß die Polymerisation und auch die Copolymerisation des THF im Lösungsmittel zu einem höheren Umsatz führt als die Polymerisation in Abwesenheit des Lösungsmittels.

Die Polymerisation des THF oder die Copolymerisation des THF mit Oxiranen, wie Ethylenoxid oder Propylenoxid mit Heteropolysäuren als Katalysatoren erfolgt auf an sich bekannte Weise, wie sie z. B. in der EP-A 126 471 beschrieben ist.

Heteropolysäuren, die erfindungsgemäß verwendet werden, sind anorganische Polysäuren, die im Gegensatz zu Isopolysäuren mindestens zwei verschiedene Zentralatome besitzen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seien die Dodecawolframphosphorsäure H₃[PW₁₂O₄₀] oder die Dodecamolybdophosphorsäure H₃[PMO₁₂O₄₀] genannt. Die Heteropolysäuren können als zweites Zentralatom auch Aktionoide oder Lantanoide enthalten (s. Z. Chemie 17 (1977), Seiten 353 bis 357 bzw. 19 (1979), 308). Die Heteropolysäuren können allgemein durch die Formel H₈₋ₙ(YⁿM₁₉O₄₀) mit n = Wertigkeit des Elementes Y (z. B. Bor, Silizium, Zink) beschrieben werden (s. auch Heteropoly- und Isopoly-oxometalates, Berlin; Springer 1983). Für das erfindungsgemäße Verfahren sind als Katalysatoren Phosphorwolframsäure, Phosphormolybdänsäure, Siliziummolybdänsäure und Siliziumwolframsäure besonders gut geeignet.

Im allgemeinen bindet 1 Molekül Heteropolysäure 20 bis 40 Moleküle Wasser durch eine koordinative Bindung. Die als Katalysatoren verwendeten Heteropolysäuren sollten etwa 1 bis 8 Moleküle Wasser pro Molekül Heteropolysäure enthalten. Der Gehalt an Wasser in der Heteropolysäure bestimmt das Molekulargewicht des erhaltenen Polymerisates. Je höher der Wassergehalt im Katalysator ist, desto niedriger ist das Molekulargewicht des erhaltenen Polymerisates. Der angegebene Bereich des Wassergehaltes von 1 bis 8 Molekülen pro Molekül Heteropolysäure entspricht einem mittleren Molekulargewicht des Polyetherglykols von etwa 1000 bis 3000. Als Kohlenwasserstoffe werden z. B. aliphatische oder cycloaliphatische Kohlenwasserstoffe mit 5 bis 12 C-Atomen oder aromatische Kohlenwasserstoffe mit 6 bis 10 C-Atomen eingesetzt. Im einzelnen seien z. B. Pentan, Hexan, Heptan, Octan, Decan, Cyclohexan, Benzol, Toluol, Xylol oder Naphthalin genannt, von denen Cyclohexan, n-Hexan, n-Heptan und n-Octan bevorzugt sind. Die Kohlenwasserstoffe werden in Mengen von 20 bis 500, vorzugsweise 50 bis 200 Gew.-%, bezogen auf das THF, eingesetzt.

Die Polymerisation wird kontinuierlich oder diskontinuierlich, z. B. bei Temperaturen von 20 bis 100°C durchgeführt. Bei Normaldruck wählt man z. B. Temperaturen von 30 bis 65°C. Polymerisiert man unter Druck, so wählt man z. B. Temperaturen von 35 bis 85°C. Die Katalysatormenge beträgt z. B. 20 bis 300 Gewichtsteile, bezogen auf 100 Gewichtsteile THF. Zweckmäßigerweise verwendet man einen Polymerisationsreaktor, der mit einer Mischeinrichtung, z. B. einem Rührer ausgerüstet ist. Da die Polymerisation im 2-phasigen System abläuft, benützt man vorteilhaft einen Phasenseparator, in dem sich die Polymerisatlösung von der Katalysatorphase trennt. Diese untere Katalysatorphase wird in dem Maße, in dem sie anfällt, in die Reaktion zurückgeführt. Die obere Phase des Phasentrenngefäßes enthält das entstandene Polymerisat, den als Lösungsmittel verwendeten Kohlenwasserstoff, nicht umgesetztes THF und Heteropolysäure in der geringen Konzentration von z. B. 10 bis 40 ppm. Diese obere Phase wird nun mit einer Base neutralisiert. Als Base kommen z. B. die Hydroxide und Carbonate der Alkali- oder Erdalkalimetalle in Betracht. Nach destillativer Abtrennung des nicht umgesetzten THF und des Kohlenwasserstoffes wird das erhaltene PTMG durch Filtration von Salzspuren befreit. Oft empfiehlt es sich, das Polymerisat zusätzlich einer hydrierenden katalytischen Entfärbung an übergangsmetallkatalysatoren zu unterwerfen.

Nach dem neuen Verfahren erhält man die Polyetherglykole auf besonders wirtschaftliche Weise. Die Polymerisate enthalten überraschenderweise nur Spuren an Heteropolysäuren, so daß das erfindungsgemäße Verfahren das in der EP-A-181 621 beschriebene Verfahren, welches die mehrstufige Reinigung der durch Heteropolysäuren verunreinigten Polymerisatlösungen erforderlich macht, erheblich vereinfacht. Die Konzentration an Heteropolysäuren in den Polymerisaten, die nach dem Verfahren dieser Erfindung erhalten werden, ist mit 10 bis 100 ppm so gering, daß diese Anteile nicht in den Polymerisationsansatz zurückgeführt werden müssen. Die Kosten für den Verlust sind vernachlässigbar und der Aktivitätsverlust im Polymerisationsreaktor macht sich erst nach sehr langen Zeiträumen geringfügig bemerkbar. Deshalb kann man die im Polymerisat gelöste geringe Heteropolysäuremenge auf einfache Weise durch Neutralisation mit einer Base oder Adsorption wie in EP-A 0 181 621 beschrieben, entfernt. Die oben auf Seite 1, Zeile 30-40 beschriebene aufwendige Abtrennung der Hauptmenge Heteropolysäure aus den Polymerisatansätzen entfällt also beim erfindungsgemäßen Verfahren.

Die nach dem erfindungsgemäßen Verfahren erhältlichen Polyetherglykole zeichnen sich durch eine sehr enge Molekulargewichtsverteilung aus und übertreffen auch in dieser vorteilhaften Eigenschaft die Polymerisate, die durch Polymerisation von THF in Abwesenheit von Kohlenwasserstoffen erhalten werden.

Die im Beispiel genannten Teile sind Gewichtsteile. Der Heterogenitätsquotient Mw/Mn wird auf Seite 1 der EP-A-195 910 erläutert.

### Beispiel

a) Formierung des Katalysators
   400 Teile bei 150°C und 0,1 mbar entwässerte Phosphorwolframsäure, H₃[PW₁₂O₄₀] mit einem Wassergehalt von 0,89 Gew.-% werden mit einer Mischung aus 13,6 Teilen Wasser und 450 Teilen THF vorsichtig bei Temperaturen unter 40°C im Verlaufe von 1 Stunde versetzt. Das erhaltene Gemisch wird 5 Stunden bei 60°C intensiv gerührt. Der Rührer wird dann abgestellt und die sich bildenden 2 Phasen werden voneinander getrennt. Man erhält 181 Teile als obere Phase (Polymerisatphase) und 683 Teile als untere Phase (Katalysatorphase). Die Polymerisatphase hat einen Gehalt an PTMG von 13 Gew.-%. Das PTMG hat ein Molekulargewicht von 2 410 und einen Heterogenitätsquotienten (Mw/Mn) von 1,8. Der Gehalt an Heteropolysäure in der Polymerisatphase beträgt 4,5 Gew.-%.
b) Polymerisation von THF
   Die untere Phase (Katalysatorphase) wird in einen Polymerisationsreaktor gegeben und mit 150 Teilen THF, 0,75 Teilen Wasser und 100 Teile Cyclohexan versetzt. Die Polymerisation wird unter kräftigem Rühren 5 Stunden bei 60°C durchgeführt. Der erste Ansatz liefert 258 Teile obere Phase mit einem PTMG-Gehalt von 37 Gew.-%. Das PTMG hat ein Molekulargewicht von 2050 und einen Heterogenitätsquotienten (Mw/Mn) von 1,5. Die abgetrennte obere Phase enthält ca. 28 ppm Heteropolysäure. Die Katalysatorphase wird wieder in den Reaktor gegeben. In der Folge werden weitere 10 Polymerisationsansätze mit je 150 Teile THF, 0,5 bis 0,75 Teilen Wasser und 100 Teilen Cyclohexan - wie oben beschrieben - bei 60°C durchgeführt. Die erhaltenen Polymerisate weisen Molekulargewichte von 1960 bis 2100 auf. Die Heterogenitätsquotienten (Mw/Mn) liegen zwischen 1,4 und 1,5. Der Gehalt an ausgetragener Heteropolysäure in den einzelnen Ansätzen liegt zwischen 25 und 30 ppm.

Danach wird die Polymerisationsapparatur kontinuierlich betrieben, indem ihr stündlich 25 Teile THF mit einem Wassergehalt von 0,43 Gew.-% und 25 Teile Cyclohexan zugeführt werden. Im freien Überlauf gelangt ein Gemisch aus Katalysatorphase und Polymerisatphase (die PTMG, Cyclohexan, THF und Spuren Katalysaotr enthält) in das Phasentrenngefäß. In diesem setzt sich die Katalysatorphase unten ab. Sie wird in dem Maße, in dem sie erhalten wird, in den Polymerisationsreaktor zurückgeführt. Die obere polymerisathaltige Phase gelangt zur Aufarbeitung. Dazu werden im ersten Schritt die mitgeführten Heteropolysäure-Spuren mit verdünnter (10 gew.-%iger) Natronlauge neutralisiert und die so behandelte Polymerisatlösung 2-stufig bei Normaldruck und bei 10 mbar bei Temperaturen bis zu 180°C von Lösungsmitteln befreit. Für die Reinigung von geringen Salzverunreinigungen filtriert man das Polymerisat beispielsweise über ein Seitz-Filter und erhält ein reines PTMG von sehr hohem Qualitätsstandard mit einem Heterogenitätsquotienten von 1,4. Der Umsetzungsgrad des Polytetrahydrofurans liegt in dem kontinuierlichen Versuch, der insgesamt über 72 Stunden betrieben wird, bei 32 Gew.-%.

Verwendet man anstelle von Cyclohexan bei der Polymerisation die gleiche Menge n-Heptan, so erhält man im wesentlichen dasselbe Polymerisationsergebnis. Von der Heteropolysäure wird mit der Polymerisatphase jedoch nur etwa 50 % der Menge ausgetragen, die bei den Polymerisationsausträgen mit Cyclohexan gelöst werden.

Verwendet man bei der Polymerisation anstelle von THF eine Mischung aus 92 Teilen THF und 8 Teilen Propylenoxid und polymerisiert wie oben beschrieben diskontinuierlich in Gegenwart der gleichen Menge Cyclohexan, so erzielt man einen 30 %igen Umsetzungsgrad. Das Polymerisat hat ein mittleres Molekulargewicht von 1800, einen Heterogenitätsquotienten (Mw/Mn) von 1,6 und einen Propylenoxidgehalt von ca. 30 Gew.-%.

## Patentansprüche

1. Verfahren zur Herstellung von Polyetherglykolen durch Polymerisation von Tetrahydrofuran oder Copolymerisation von Tetrahydrofuran mit Oxiranen, bei dem man als Katalysator eine Heteropolysäure verwendet, dadurch gekennzeichnet, daß man die Polymerisation in Gegenwart von 20 bis 500 Gew.-%, bezogen auf das eingesetzte Tetrahydrofuran, eines Kohlenwasserstoffes durchführt.

2. Verfahren nach Anspruch 1, dadurch gekennzeichnet, daß die Kohlenwasserstoffmenge 50 bis 200 Gew.-%, bezogen auf das eingesetzte Tetrahydrofuran, beträgt.

3. Verfahren nach Anspruch 1, dadurch gekennzeichnet, daß man als Kohlenwasserstoff einen aliphatischen oder cycloaliphatischen Kohlenwasserstoff mit 5 bis 12 C-Atomen oder einen aromatischen Kohlenwasserstoff mit 6 bis 10 C-Atomen verwendet.

4. Verfahren nach Anspruch 3, dadurch gekennzeichnet, daß man als Kohlenwasserstoff Cyclohexan, n-Hexan, n-Heptan oder n-Octan verwendet.

## Claims

1. A process for the preparation of polyether glycols by polymerization of tetrahydrofuran or copolymerization of tetrahydrofuran with oxiranes, in which the catalyst used is a heteropolyacid, which comprises carrying out the polymerization in the presence of from 20 to 500% by weight, based on the tetrahydrofuran employed, of a hydrocarbon.

2. A process as claimed in claim 1, wherein the amount of hydrocarbon is from 50 to 200% by weight, based on the tetrahydrofuran employed.

3. A process as claimed in claim 1, wherein the hydrocarbon used is an aliphatic or cycloaliphatic hydrocarbon having 5 to 12 carbon atoms or an aromatic hydrocarbon having 6 to 10 carbon atoms.

4. A process as claimed in claim 3, wherein the hydrocarbon used is cyclohexane, n-hexane, n-heptane or n-octane.

## Revendications

1. Procédé de préparation de polyétherglycols par la polymérisation du tétrahydrofuranne, ou la copolymérisation du tétrahydrofuranne avec des oxirannes, conformément auquel on utilise un hétéropolyacide à titre de catalyseur, caractérisé en ce que l'on entreprend la polymérisation en présence de 20 à 500% en poids d'un hydrocarbure, par rapport au tétrahydrofuranne mis en oeuvre.

2. Procédé suivant la revendication 1, caractérisé en ce que la proportion d'hydrocarbure varie de 50 à 200% en poids, par rapport au tétrahydrofuranne mis en oeuvre.

3. Procédé suivant la revendication 1, caractérisé en ce que, à titre d'hydrocarbure, on utilise un hydrocarbure aliphatique ou cycloaliphatique, qui comporte de 5 à 12 atomes de carbone, ou un hydrocarbure aromatique qui comporte de 6 à 10 atomes de carbone.

4. Procédé suivant la revendication 3, caractérisé en ce que l'on utilise le cyclohexane, le n-hexane, le n-heptane ou le n-octane à titre d'hydrocarbure.
